# EUROPÄISCHE PATENTSCHRIFT

(11) **EP 4 045 395 B1**
(45) Veröffentlichungstag und Bekanntmachung des Hinweises auf die Patenterteilung: **14.05.2025**
(21) Anmeldenummer: 20801150.2
(22) Anmeldetag: 14.10.2020
(51) Int. Cl.: B63J 3/04

(54) **ENERGIEÜBERTRAGUNGSEINRICHTUNG UND VERFAHREN ZUR ENERGIEÜBERTRAGUNG**
ENERGY TRANSMISSION DEVICE AND METHOD FOR TRANSMITTING ENERGY
DISPOSITIF DE TRANSMISSION D'ÉNERGIE ET PROCÉDÉ DE TRANSMISSION D'ÉNERGIE

(30) Priorität: 18.10.2019 DE 102019128184
(43) Veröffentlichungstag der Anmeldung: 24.08.2022
(73) Patentinhaber: Stemmann-Technik GmbH, 48465 Schüttorf (DE)
(72) Erfinder: KAPITÄN, Eugen, 48431 Rheine (DE); PÄSLER, Sebastian, 48431 Rheine (DE); BERTELS, Andre, 48493 Wettringen (DE); GLÜCKHARDT, Reimund, 49835 Wietmarschen (DE); ALTMEPPEN, Rainer, 49716 Meppen (DE)
(74) Vertreter: Griepenstroh, Jörg
(86) Internationale Anmeldenummer: PCT/DE2020/100888
(87) Internationale Veröffentlichungsnummer: WO 2021/073691

(56) Entgegenhaltungen:
- US-A1- 2012 031 721
- US-A1- 2013 341 144
- US-A1- 2018 326 857

## Beschreibung

Die Erfindung betrifft eine Energieübertragungseinrichtung für ein Wasserfahrzeug gemäß den Merkmalen des Patentanspruchs 1.

Energieübertragungseinrichtungen für Wasserfahrzeuge sind erforderlich, um z. B. elektrisch angetriebene Fähren aufzuladen.

Die US 2012/031721 A1 offenbart eine Energieübertragungseinrichtung für ein Wasserfahrzeug. An einem landseitigen Turm ist ein Ausleger angeordnet, der um eine horizontale und um eine vertikale Achse schwenkbar ist. Der Ausleger weist an seinem freien Ende einen Stecker auf, der mit einem zweiten Stecker an dem Wasserfahrzeug zur Übertragung elektrischer Energie koppelbar ist. Der Arm besitzt mehrere drehgelenkig miteinander verbundene Abschnitte, die zueinander verschwenkt werden können, um den Stecker in die gewünschte Position zu bringen.

Die US 2018/326857 A1 offenbart ebenfalls eine Anordnung zur Versorgung von Schiffen mit elektrischer Energie. Elektrische Steckerwerden während des Anlegevorganges mechanisch mit dem Schiff gekoppelt. Das Anlegen setzt voraus, dass der Pier selbst schwimmend angeordnet ist, weil die mechanischen Kopplungselemente eine transversale, vertikale oder longitudinale Bewegung des Wasserfahrzeuges bzw. einer Fähre relativ zum Pier verhindern sollen. Dadurch kann auf Ausleger verzichtet werden, welche Relativbewegungen ausgleichen können. Nachteilig ist hierbei, dass der Pier selbst schwimmend ausgebildet werden muss.

Die US 2013/341144 A1 offenbart eine Energieübertragungseinrichtung für Wasserfahrzeuge mit einem landbasierten, horizontal verlagerbaren Träger auf einem Schienensystem. An einem Ausleger des Trägers ist ein Stecker befestigt, der horizontal und vertikal verlagerbar ist. Der Ausleger selbst besitzt mehrere Gelenkelemente, die nach dem Scherenprinzip miteinander verbunden sind und demzufolge ausgefahren und eingefahren werden können.

Der Erfindung liegt die Aufgabe zugrunde, den Stand der Technik hinsichtlich der Energieübertragungseinrichtungen für Wasserfahrzeuge weiterzuentwickeln.

Diese Aufgabe ist bei einer Energieübertragungseinrichtung gemäß den Merkmalen des Patentanspruchs 1 gelöst. Ein Verfahren zur Energieübertragung ist Gegenstand des Patentanspruchs 10.

Die erfindungsgemäße Energieübertragungseinrichtung sieht einen landseitig angeordneten Turm vor, der einen Ausleger trägt. Der Ausleger ist um eine horizontale Achse und um eine vertikale Achse schwenkbar mit dem Turm verbunden. Der Ausleger ist teleskopierbar. An seinem freien Ende besitzt der Ausleger einen ersten Stecker, der mit einem zweiten Stecker an dem Wasserfahrzeug zur Übertragung elektrischer Energie koppelbar ist.

Der Stecker an dem Ausleger ist dazu ausgebildet, in einer vertikalen Steckbewegung von oben mit dem zweiten, nach oben orientierten Stecker am Wasserfahrzeug zur Energieübertragung in elektrischen Kontakt zu kommen, indem der Ausleger relativ zum Turm um die besagten Achsen verschwenkt wird.

Die erfindungsgemäße Energieübertragungseinrichtung kann sowohl für die Stromübertragung von Niederspannung als auch für die von Mittelspannung ausgeführt sein.

Der Begriff "Stecker" steht stellvertretend für eine Steckkomponente als Vaterteil und/oder Mutterteil. Der Stecker im Sinne der Erfindung kann eine komplexe Baugruppe bezeichnen, die mehrere Kontakte, Positionierhilfen (elektrisch, mechanisch, elektro-mechanisch), Stellantriebe, Heizmittel, Halte- und Verriegelungsmittel etc. umfassen kann. Da der Stecker am Ausleger beweglich ist und abgesenkt wird, kann der Stecker am Wasserfahrzeug als beim Stecken ortsfeste Baugruppe als Steckdose bezeichnet werden. Dieser Begriff "Steckdose" wird nachfolgend für das leichtere Verständnis analog zu dem Begriff "Stecker" benutzt. Der Stecker/die Steckdose am Wasserfahrzeug ist ebenfalls im Sinne eines Steckkopfes als Baugruppe zu verstehen. Der Begriff "Steckdose" ist nicht einschränkend in Hinsicht auf die Funktion als Vaterstück/Mutterstück

Nach dem erfolgreichen Andockvorgang und dem Festmachen des Wasserfahrzeuges, insbesondere einer Fähre, wird der landseitige, erste Stecker durch Schwenken/Drehen/Ein- oder Ausfahren des Auslegers und durch Verfahren des ersten Steckers oberhalb der schiffsseitigen Steckdose bzw. des dortigen Steckers positioniert. Die Positionierung ist nicht trivial, da sich die Lage der Steckdose relativ zum Stecker verändert. Die Lage hängt von der Tide, den Belastungs- und Beladungszuständen des Wasserfahrzeuges, von dem Wellengang und von den Toleranzen im Eingriff einer Landrampe zwischen Land und Wasserfahrzeug ab.

Um sicherzustellen, dass der Steckvorgang in jeder Lage des definierten Arbeitsbereichs erfolgen kann und der Stecker durch die Steckdose in der gesteckten Position mitbewegt werden kann, wenn sich das Wasserfahrzeug im definierten Ladebereich bewegt, lassen sich der Ausleger und der Stecker relativ zueinander verfahren. Der Ausleger kann insbesondere um die Mittelachse des Turms und um eine Achse, die orthogonal zur Mittelachse des Turms steht, verschwenkt werden. Hierbei handelt es sich insbesondere um eine vertikale und um eine horizontale Achse. Der landseitige Turm wird entsprechend der Örtlichkeiten hinsichtlich des abzudeckenden Arbeitsbereichs ausgelegt. Die landseitige Einheit besteht daher mindestens aus einer Säule bzw. einem Turm mit dem verschwenkbaren Ausleger, an dessen vorderem Ende der Stecker vorzugsweise inklusive Heizeinrichtungen angeordnet ist. Zu der landseitigen Einheit gehört mindestens ein Schaltschrank und ein notwendiger Klemmkasten zur Energieübertragung. Wenn das System nicht in Betrieb ist, dann wird der landseitige Stecker durch eine Abdeckung geschützt. Die schiffsseitige Einheit ist bevorzugt mit einem Verschluss, insbesondere mit einem Schutzdach versehen. Ebenso sind auch schiffsseitig entsprechende Schaltschränke und vorzugsweise Heizungen vorgesehen, um den Stecker eisfrei zu halten.

Verkürzt dargestellt wird nach dem Festmachen des Wasserfahrzeuges der landseitige Stecker vertikal über der wasserfahrzeugseitigen Steckdose positioniert. Anschließend wird der dachseitige Verschluss der Steckdose geöffnet. Der landseitige Stecker wird heruntergefahren. Eine Feinpositionierung des Steckers relativ zur Steckdose zum Einstecken des Stromkontakts schließt sich an. Nach der Energieübertragung wird der Stecker wieder entkoppelt, der Ausleger angehoben und in eine Parkposition verschwenkt. Die Stecker werden bedeckt.

Die Erfindung zeichnet sich dadurch aus, dass der Ausleger einen sehr großen Bereich abdeckt, was es vereinfacht, den Ausleger mit sehr unterschiedlichen Typen von Wasserfahrzeugen zu koppeln. Es ist lediglich wasserseitig ein passender Stecker/eine passende Steckdose erforderlich.

Eine exakte Positionierung der Stecker erfolgt mittels der Unterstützung von Sensoren. Hierzu ist an wenigstens einem der Stecker wenigstens ein Sensor zur Positionierung des ersten Steckers gegenüber dem zweiten Stecker angeordnet, wobei in einer Auswerte -und Steuereinheit Daten des wenigstens einen Sensors in Steuersignale zur Ansteuerung von Auslegerantrieben umsetzbar sind, um auf diese Weise den Ausleger zu verschwenken und um die Stecker zu koppeln oder auch zu entkoppeln. Der Ausleger wird über die Auslegerantriebe um seine jeweiligen Schwenkachsen verschwenkt bzw. auch teleskopiert.

Die Erkennung der Position des Steckers relativ zu dem wasserseitigen Stecker bzw. zur dortigen Steckdose erfolgt vorzugsweise mit Hilfe eines sogenannten 3D-Sensors. Dabei erkennt der 3D-Sensor die Position an dem Stecker und an der Steckdose über Reflektoren, die an den Steckern angeordnet sind. Erst wenn der Stecker nah an die Steckdose herangefahren wurde, wird der dachseitige Verschluss der Steckdose geöffnet. Diese Maßnahme dient dem Schutz des Systems vor Umgebungseinflüssen. Es wird über eine Steuerlogik sichergestellt, dass der Stecker erst dann weiter heruntergefahren wird, wenn der Verschluss der Steckdose geöffnet ist. Die Kommunikation zwischen dem landseitigen und dem wasserfahrzeugseitigen Teil erfolgt insbesondere drahtlos, bevorzugt über eine WLAN-Verbindung. Bei einer Unterbrechung oder bei einem Verlust der WLAN-Verbindung wird der Steckvorgang sofort abgebrochen und das System in einen Nottrenn-Modus versetzt. In diesem Fall wird der Ausleger angehoben und der Stecker aus der Steckdose herausgezogen.

Die Feinpositionierung des Steckers relativ zur Steckdose erfolgt vorzugsweise über Ultraschallsensoren. Zusätzlich können mechanisch auslösende Kontakte installiert sein, die eine korrekte Position der Stromkontakte zueinander erkennen, damit diese bei einem Steckversuch nicht beschädigt werden. Die mechanischen Kontakte können insbesondere deshalb vorgesehen sein, da es trotz der Feinpositionierung durch Ultraschallsensoren zu einer Fehlstellung der Kontakte zwischen Stecker und Steckdosen kommen kann. Nachfolgend sind beispielhaft Ursachen für eine Fehlstellung angegeben:
Der Stecker ist dreiachsig drehbar mit dem Ausleger verbunden, so dass er sehr viele Freiheitsgrade hat. Er kann über ein Kugelgelenk oder über eine kugelgelenkartige Verbindung mit dem Ausleger verbunden sein. Wenn der Stecker zu schnell abgesenkt wird, stößt er eventuell an einer Seite der Steckdose an, ohne dass die Feinpositionierung auf Basis von Ultraschallsensoren schnell genug reagieren kann. In diesem Fall dreht sich der Stecker und hat somit keine parallele Lage mehr zur Steckdose. Dadurch melden die Ultraschallsensoren eventuell auf allen Seiten gleiche Abstände, obwohl der Stecker noch nicht in der richtigen Position zur Steckdose steht.

Eine weitere Fehlstellung kann sich dadurch ergeben, dass die durch die Feinpositionierung zugelassene Toleranz in der Abstandsmessung so groß gewählt ist, dass das System eine fälschlich korrekte Position des Steckers zur Steckdose meldet.

Schließlich kann durch eine Schieflage des Wasserfahrzeugs verursacht durch Wellen, durch auf die Fähre auffahrende Landfahrzeuge oder durch Toleranzen im Eingriff zwischen Landrampe und Fähre unter Umständen keine parallele Lage von Stecker zur Steckdose erreicht werden. In diesem Fall würde der Stecker teilweise zu früh an der Steckdose anstoßen und sich drehen. Die Ultraschallsensoren könnten auch in diesem Fall ggf. gleiche Abstände auf allen Seiten melden, obwohl der Stecker noch nicht in der richtigen Position zur Steckdose steht.

Es wird daher als vorteilhaft angesehen, wenn zusätzlich zu den Ultraschallsensoren Zentrierelemente und Zentrieraufnahmen an den Steckern bzw. an der Steckdose vorgesehen sind. Die Zentrieraufnahmen können trichterförmig gestaltet sein. Auch die Zentrierelemente können Schrägflächen aufweisen, wie z. B. kegelförmige Vorsprünge. In diesem Fall erfolgt die weitergehende Feinzentrierung über die mechanisch miteinander in Eingriff stehenden Zentrierelemente und Zentrieraufnahmen.

Während der Positionierung und während des Steckvorgangs sind die Drehmomente der Auslegerantriebe des Auslegers so eingestellt, dass weder die Antriebe noch andere Teile des Systems beschädigt werden können, falls sich die Position des Wasserfahrzeuges in einer kurzen Zeit verändert, z. B. weil die schiffsseitige Steckdose den landseitigen Stecker in eine bestimmte Richtung drückt. Im gesteckten Zustand bringt der Auslegerantrieb für die Absenkbewegung ein gewisses Drehmoment auf, um einen sicheren Steckvorgang zu gewährleisten. Der entsprechende Auslegerarm muss auch im gesteckten Zustand das gewünschte Drehmoment aufbringen, um die Steckposition aufrechtzuerhalten. Gleichsam wird dieser Auslegerantrieb auf ein minimal benötigtes Drehmoment eingestellt. Das Drehmoment kann reduziert werden, wenn die Stecker über zuschaltbare Verriegelungselemente z.B. durch elektrische Haltemagnete miteinander verbunden sind. Die anderen Auslegerantriebe zur translatorischen Verlagerung oder Seitenverlagerung bringen im gesteckten Zustand kein Drehmoment auf, um die Steckverbindung nicht zu belasten.

Die einzelnen elektrischen Steckkontakte sind vorzugsweise so ausgeführt, dass beim Stecken zuerst PE-Kontakte - für den Fall, dass PE verbaut wird - dann die Hauptstromkontakte und erst anschließend die Pilotkontakte ineinandergesteckt werden bzw. aufeinander aufliegen. Über die Pilotkontakte kann ein Signal zur Freischaltung des Hauptstroms über die Hauptstromkontakte gegeben werden.

Es wird als besonders vorteilhaft angesehen, wenn der Ausleger Schleifleitungen und mit den Schleifleitungen in Kontakt stehende Stromabnehmer aufweist, um zu übertragende elektrische Energie von einem nicht teleskopierten Abschnitt des Auslegers auf einen teleskopierten Abschnitt des Auslegers zu übertragen.

Es wird ferner als besonders vorteilhaft angesehen, wenn der Ausleger mit einem Auslegerheber gekoppelt ist. Der Auslegerheber ist nicht gleichzusetzen mit einem Auslegerantrieb, der den Auslegerheber hebt oder senkt. Der Auslegerheber soll auch dann funktionieren, wenn das gesamte System ausfällt und er soll auch in diesem Fall in der Lage sein, die Steckverbindung zu trennen. Hierzu übt der Auslegerheber eine Auslegerhebekraft auf den Ausleger auf. Die Auslegerhebekraft kann aus einem Energiespeicher abgerufen werden. Es kann sich z. B. um einen Federkraftspeicher, Gasdruckspeicher oder auch um eine Magnetkraft oder eine Gewichtskraft (Lageenergie) handeln.

Diese Kraft ist so groß, dass der Stecker von der Steckdose allein durch die Auslegerhebekraft trennbar ist. Der Auslegerheber basiert insbesondere auf einer Gewichtskraft. Insbesondere handelt es sich um ein Gegengewicht, das auf der dem ersten Stecker abgewandten Ende des Auslegers angeordnet ist vergleichbar mit einem Gegengewicht bei einem Turmdrehkran. Das Gegengewicht kann alternativ auch an anderer Stelle, z. B. im/am Turm angeordnet sein und beispielsweise über einen Seilzug auf den Ausleger die gewünschte Auslegerhebekraft ausüben. Die Auslegerhebekraft wirkt für den Stecker immer nach oben. Der Auslegerantrieb, der zum Absenken des Steckers vorgesehen ist, wirkt dieser Auslegerhebekraft entgegen. Zum Entkoppeln muss das Drehmoment des entsprechenden Antriebs nur soweit abgesenkt werden, dass die Auslegerhebekraft ein größeres Moment auf den Stecker ausübt, als der entsprechende Antrieb. Auch bei einem Ausfall des Antriebs wird der Stecker folglich über die Auslegerhebekraft selbsttätig aus der Steckposition herausgezogen.

In dem Fall, dass sich das Wasserfahrzeug aus dem definierten Arbeitsbereich bewegt, den der landseitige Ausleger ausgleichen kann, oder im Falle eines Verlustes eines Kommunikationssignals zwischen Land- und Wasserfahrzeugseite, wird das Energieübertragungssystem in den Nottrenn-Modus geschaltet. Dabei wird das Antriebsmoment des Antriebs für das vertikale Absenken des Auslegers auf ein Minimum herabgesetzt, sodass der Auslegerheber den Stecker innerhalb einer kurzen Zeit aus der Steckdose heben kann. Die äußeren Grenzen des zulässigen Arbeitsbereiches des Auslegers werden mit Hilfe von Sensoren detektiert. Beim Auslösen einer dieser Sensoren wird das System in den Nottrenn-Modus versetzt. Auch nach Abschluss des Ladevorganges einer Fähre oder nach dem Lösen des Wasserfahrzeugs wird das Drehmoment des Auslegerantriebs, der für das Absenken des Auslegers verantwortlich ist auf einen geringeren Wert umgeschaltet, sodass der Stecker durch die Auslegerhebekraft, die insbesondere aus einer Gewichtskraft resultiert, aus der Steckdose gehoben wird. Der Ausleger wird mit Hilfe eines Auslegerantriebs in eine Parkposition geschwenkt. Erst dann darf das Losmachen und Ablegen des Wasserfahrzeugs erfolgen. Beim Anlegen erfolgt der Vorgang umgekehrt.

Es wird als besonders vorteilhaft angesehen, wenn der landseitige Stecker aus zwei zueinander beweglichen Baugruppen besteht. Zwischen diesen Baugruppen kann eine lösbare Verriegelung wirksam sein, welche die beiden Baugruppen in einer Ausgangsposition hält. In der Ausgangsposition sind die Baugruppen beabstandet (oben/unten). Die lösbare Verriegelung bringt eine Verriegelungskraft auf, z. B. durch Elektromagneten und/oder eine zu überwindende Mindestkraft z.B. durch Druckfedern. Das Prinzip wird nachfolgend anhand von Druckfedern erläutert.

Die Druckfedern wirken in Steckrichtung, d. h. nach vertikal oben/unten. Eine untere Baugruppe des ersten Steckers ist mit der oberen Baugruppe verbunden und relativ zu oberen Baugruppe verlagerbar. Wenn sich der Stecker bereits nahe der Steckdose befindet oder die Positionierung durch Ultraschallschallsensoren nicht ganz genau exakt möglich ist, kann eine mechanische Positionierung über die Zentrierelemente und Zentrieraufnahmen erfolgen. Vorzugsweise ist die lösbare Verriegelung bzw. sind die Druckfedern so stark ausgelegt, dass sie bei der mechanischen Positionierung zunächst nicht nachgeben. Das bedeutet, dass der Stecker zunächst nur soweit in die Steckdose hineingedrückt wird, bis die Zentrierelemente ineinander fassen und aufeinander liegen. In diesem Zustand ist sichergestellt, dass die beiden Stecker exakt positioniert sind. Erst wenn die Zentrierelemente und Zentrieraufnahmen, vorzugsweise Kegelflächen, aufeinander aufliegen und der Antrieb des Auslegers den Stecker weiter herunterdrückt, geben die Druckfedern bzw. gibt die lösbare Verriegelung nach. Zu diesem Zeitpunkt ist allerdings schon sichergestellt, dass auch die elektrischen Kontakte exakt übereinander positioniert sind. Wenn die Verriegelung nachgibt, bewegt sich die obere Baugruppe des Steckers relativ zu der unteren Baugruppe weiter nach unten und die elektrischen Kontakte werden gesteckt. D. h., dass beim Eindrücken des Steckers eine erste Baugruppe des Steckers bereits positioniert ist und seine Lage nicht weiter verändert wird, während die gegenüber der ersten Baugruppe abgestützte obere Baugruppe weiter gegen die Verriegelung, z. B. gegen eine Federkraft oder eine Magnetkraft abgesenkt wird und durch den Antrieb des Auslegers während des gesamten Steckvorgangs auch in dieser Position gehalten wird.

Die erfindungsgemäße Energieübertragungseinrichtung ist aufgrund der Grobpositionierung, der anschließenden Feinpositionierung und in Kombination mit den mechanischen Zentrierelementen auch dann präzise steckbar, wenn das Wasserfahrzeug sich nicht exakt parallel zum ersten Stecker befindet. Der Stecker kann über weitere Antriebe in die richtige Position gedreht werden, insbesondere kann er um eine vertikale Achse des Steckers verschwenkt werden.

Die Erfindung wird nachfolgend anhand von schematisch dargestellten Ausführungsbeispielen erläutert. Es zeigen:
- Figur 1: Eine perspektivische Ansicht einer Energieübertragungseinrichtung;
- Figur 2: Die Energieübertragungseinrichtung der Figur 1 während eines Positioniervorganges;
- Figur 3: Die Positioniervorrichtung der Figur 1 vor dem Absenken auf eine Steckdose an einem Wasserfahrzeug;
- Figur 4: Die Energieübertragungseinrichtung der Figur 1 im gesteckten Zustand;
- Figur 5: Die Energieübertragungseinrichtung der Figur 1 in einer Parkposition;
- Figur 6: Ein weiteres Ausführungsbeispiel einer Energieübertragungseinrichtung in rein schematischer Darstellungsweise;
- Figur 6a: Ein weiteres Ausführungsbeispiel einer Energieübertragungseinrichtung in rein schematischer Darstellungsweise;
- Figur 7: Die Energieübertragungseinrichtung der Figur 6 bei angehobenem Stecker;
- Figur 8: Die Energieübertragungseinrichtung der Figuren 6 und 7 bei seitlich ausgelenktem Stecker;
- Figur 9: Eine perspektivische Ansicht von oben auf den Stecker der Figur 8;
- Figur 9a: In vergrößerter Darstellung den Stecker 5 der Figur 6a;
- Figur 10: Den Stecker der Figur 9 im gekoppelten Zustand in einer Seitenansicht und
- Figur 11: den Stecker der Figur 10 in Ansicht von unten.

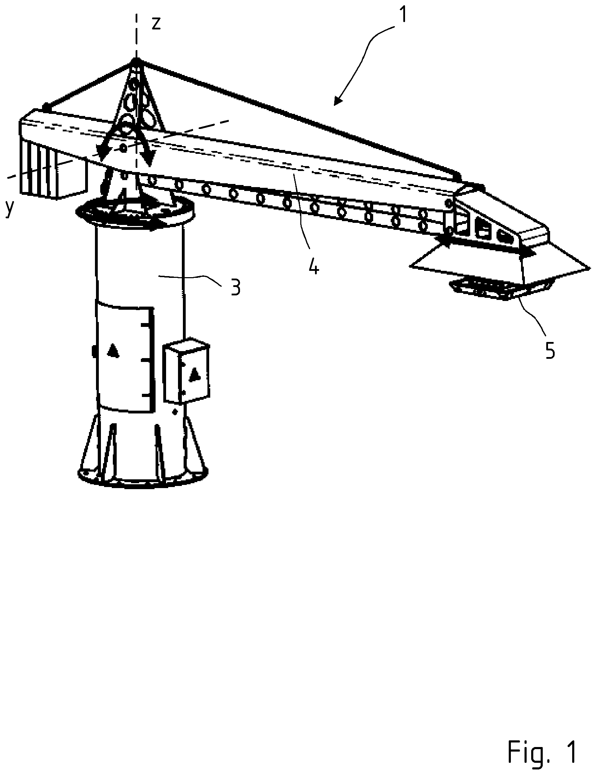

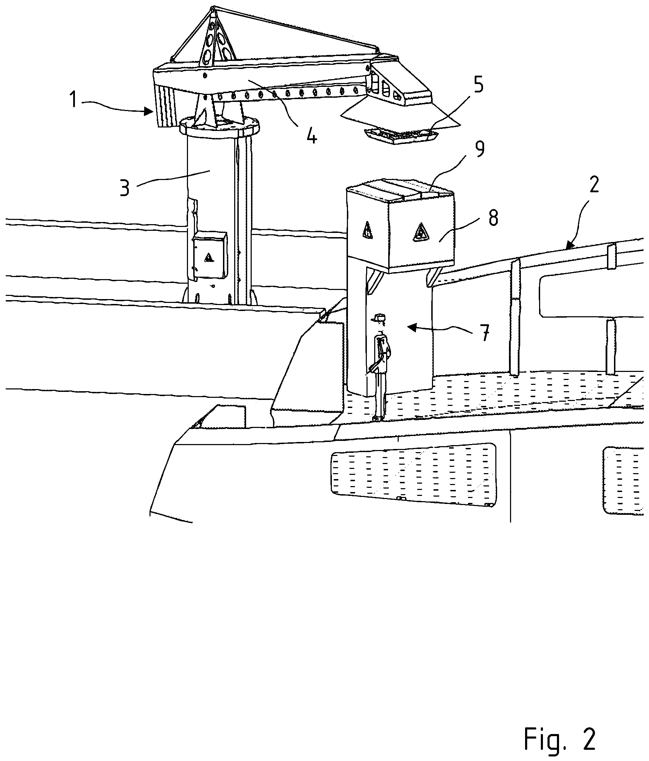

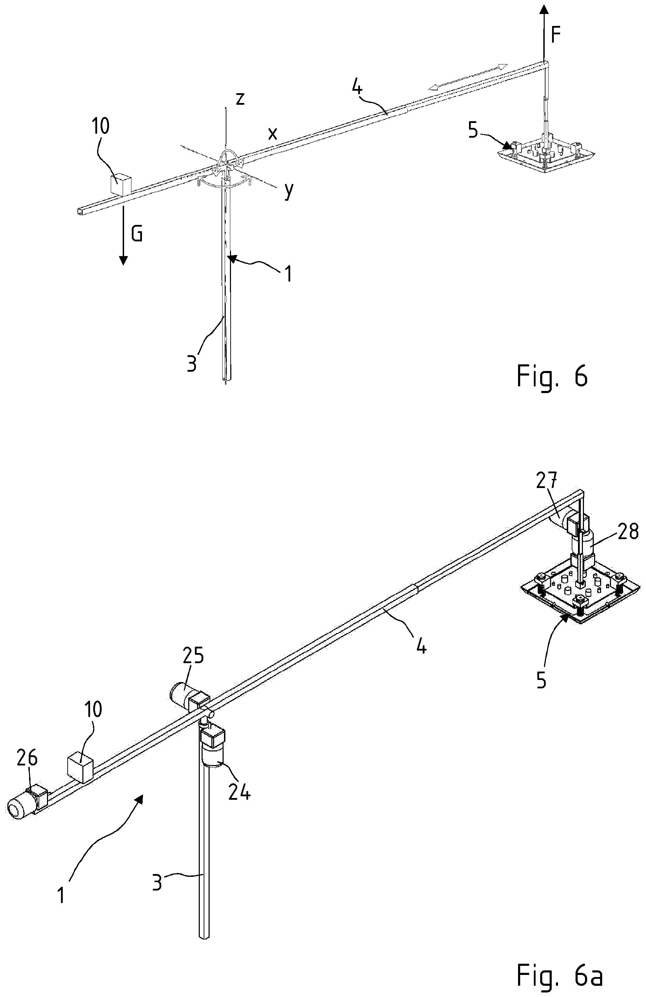

Die Figur 1 zeigt eine Energieübertragungseinrichtung 1 für ein Wasserfahrzeug 2, wie es in den Figuren 2 bis 5 dargestellt ist. Das Wasserfahrzeug 2 ist eine Fähre, die elektrisch betrieben wird. Die Energieübertragungseinrichtung 1 umfasst einen Turm 3 und einem an der Spitze des Turms 1 angeordneten Ausleger 4. Er ist zweischenklig. Der Turm 3 ist in einem mittleren Bereich des Auslegers 4 angeordnet und teilt diesen in einen längeren und einen kürzeren Bereich. Der Ausleger 4 ist gegenüber dem Turm 3 verschwenkbar. Die in der Figur 1 eingezeichneten Pfeile verdeutlichen, dass der Ausleger 4 sowohl um eine horizontale Achse, die mit Y bezeichnet wird, als auch um eine vertikale Achse, die mit Z bezeichnet wird, schwenkbar ist. Die Figur 6 zeigt in vereinfachter Darstellung das kinematische Prinzip. Zusätzlich ist der Ausleger 4 in seiner Längsrichtung teleskopierbar. Die in den Figuren 1 und 6 gezeigten Positionen des Auslegers 4 weisen jeweils in die X-Richtung des einen kartesischen Koordinatensystems. Der Ausleger 4 ist auch dann teleskopierbar, wenn er zuvor um die horizontale Achse Y bzw. die vertikale Achse Z verschwenkt wurde, also nicht in X-Richtung weist.

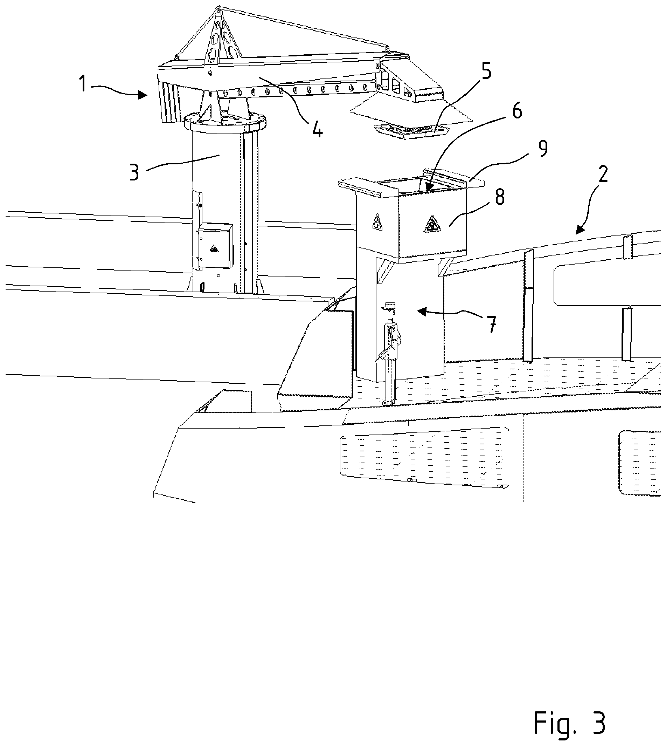

Der Ausleger 4 besitzt an seinem freien Ende einen Stecker 5. Der Stecker 5 steht stellvertretend für eine größere Baugruppe (Steckkopf, Kupplungseinheit) deren maßgebliche Aufgabe ist, einen elektrisch leitenden Kontakt zur Energieübertragung von der Landseite zum Wasserfahrzeug 2 herzustellen. Hierzu muss der Stecker 5 in die korrekte Position relativ zum Gegenstück an dem Wasserfahrzeug 2 gebracht werden. Die Figur 2 zeigt, dass der Ausleger 4 zunächst soweit verschwenkt wird, dass sich der Stecker 5 oberhalb eines als Steckdose dienenden Steckers 6 (Figur 3, verdeckt) am Wasserfahrzeug 2 befindet. Die Steckdose befindet sich in einem turmartigen Aufbau 7 auf dem Wasserfahrzeug 2. Der turmartige Aufbau 7 besitzt ein oberes Ende, das die Steckdose trägt. Die Steckdose selbst befindet sich innerhalb eines Gehäuses 8 am oberen Ende des Aufbaus 7, um die Steckdose bei Nichtgebrauch vor Witterungseinflüssen zu schützen. Das Gehäuse 8 besitzt oberseitig einen dachartigen Verschluss 9. In der Figur 2 ist der Verschluss 9 geschlossen. In der Figur 3 ist der Verschluss 9 geöffnet. Es kann sich um eine flache Dachkonstruktion handeln, die aus einem oder mehreren Segmenten besteht, die zum Öffnen relativ zueinander in Horizontalrichtung verlagert werden und dadurch die innenliegende Steckdose freigegeben (Schiebedach).

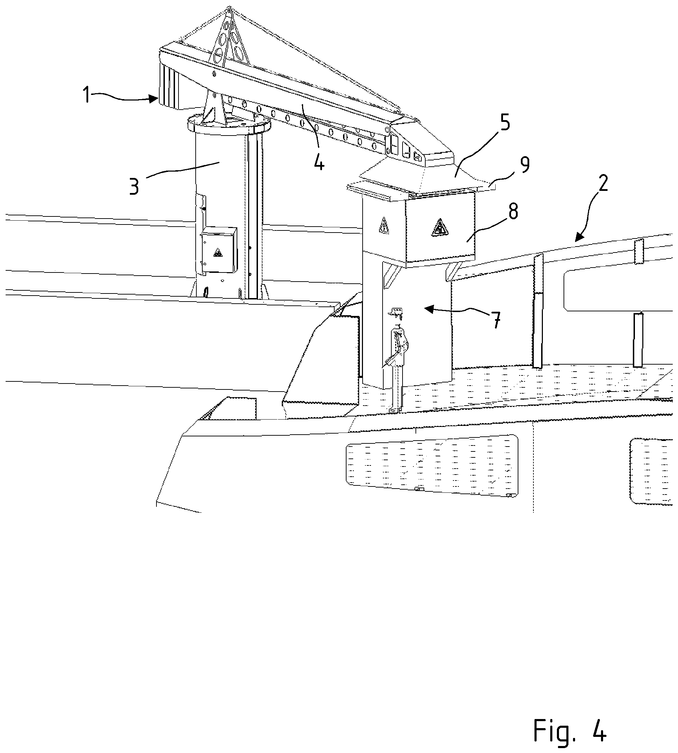

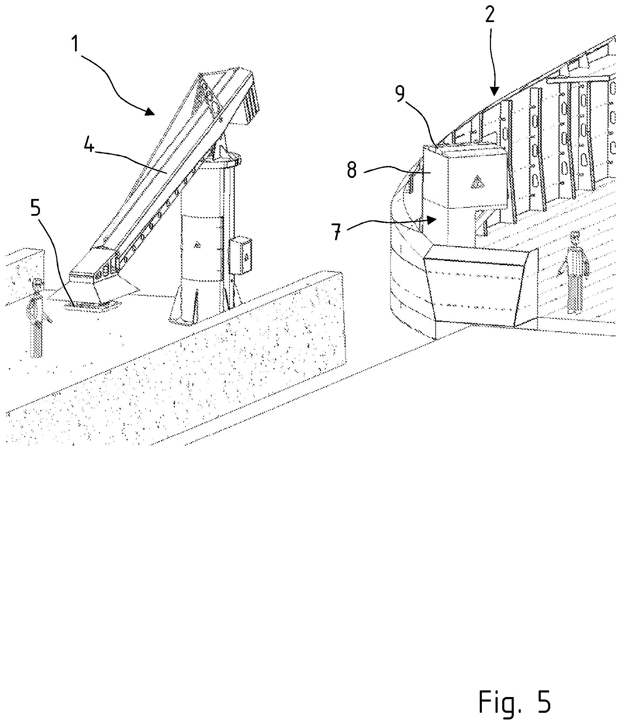

Zum Herstellen einer Steckverbindung muss der Stecker 5 auf die Steckdose 6 abgesenkt werden. Das zeigt die Figur 4. Der Steckkontakt wird solange aufrechterhalten, wie Energie und/oder Daten übertragen werden sollen. Anschließend wird der Ausleger 4 wieder angehoben und in eine Parkposition verschwenkt, wie es in Figur 5 gezeigt ist. Der Verschluss 9 an dem Gehäuse 8 oberhalb der Steckdose 6 wird wieder verschlossen. Das Wasserfahrzeug 2 kann ablegen.

Das erfindungsgemäße Verfahren wird nachfolgend detailliert anhand der Figuren 6 bis 11 erläutert. Die zuvor eingeführten Bezugszeichen werden für die wesentlichen gleichen Bauteile weiterhin verwendet.

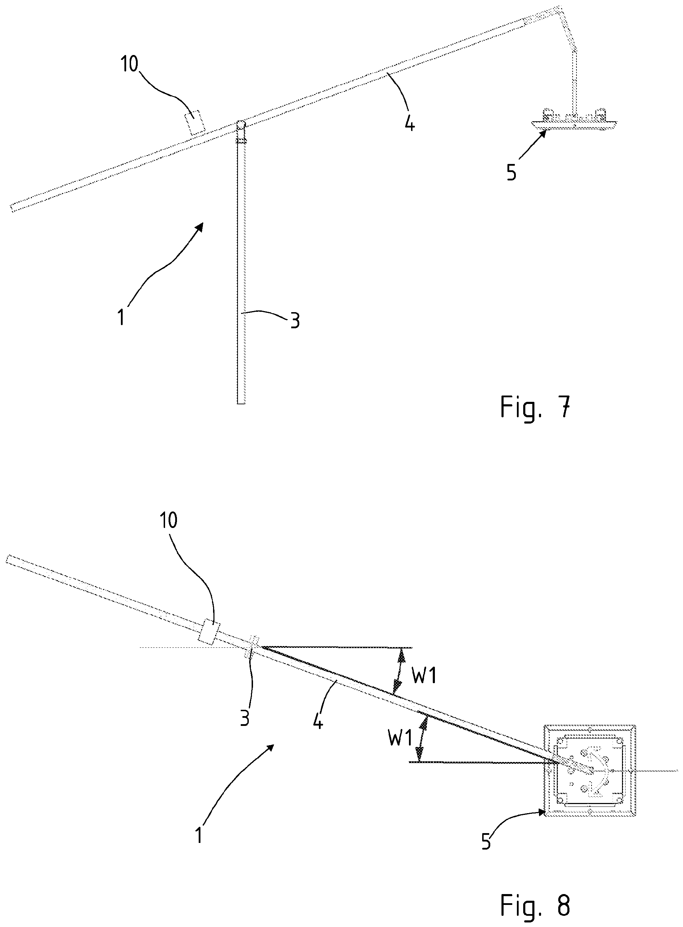

Die Figur 6 zeigt das kinematische Prinzip der erfindungsgemäßen Energieübertragungseinrichtung 1. An dem Turm 3 ist der Ausleger 4 um die eingezeichnete horizontale Achse Y verschwenkbar sowie um die vertikale Achse Z. Eine translatorische Bewegung ist in X-Richtung möglich. An einem Ende des Auslegers 4 ist der Stecker 5 angeordnet. An dem anderen Ende des Auslegers 4 ist ein Gegengewicht angeordnet, dass als Auslegerheber 10 dient. Der Auslegerheber 10 übt über seine Gewichtskraft G eine nach oben gerichtete Auslegerhebekraft F auf den Ausleger 4 bzw. den Stecker 5 aus. Da sich die horizontale Achse Y zwischen dem Auslegerheber 10 und dem Stecker 5 befindet, sind die Bewegungen der Enden des Auslegers 4 in Vertikalrichtung gegensätzlich. Wird der Ausleger 4 angehoben, wie es in Figur 7 gezeigt ist, würde sich bei einer starren Verbindung zwischen dem Stecker 5 und dem Ausleger 4 eine Winkelveränderung am Stecker 5 ergeben. Um das zu vermeiden, kann an dem Stecker 5 ein Antrieb vorgesehen sein, durch den der Stecker 5 gekippt wird. Dadurch befindet sich der Stecker 5 immer parallel zum Boden. Der Stecker 5 ist in einem Kugelgelenk gelagert.

Die Figur 6a zeigt ein Ausführungsbeispiel mit verschiedenen Antrieben. Das Energieübertragungssystem besitzt einen Antrieb 24 für die vertikale Drehachse sowie einen Antrieb 25 für eine horizontale Drehachse. Zusätzlich ist ein Antrieb 26 am hinteren Ende des Arms 4 angeordnet, der für das Teleskopieren und das Gegengewicht zuständig ist.

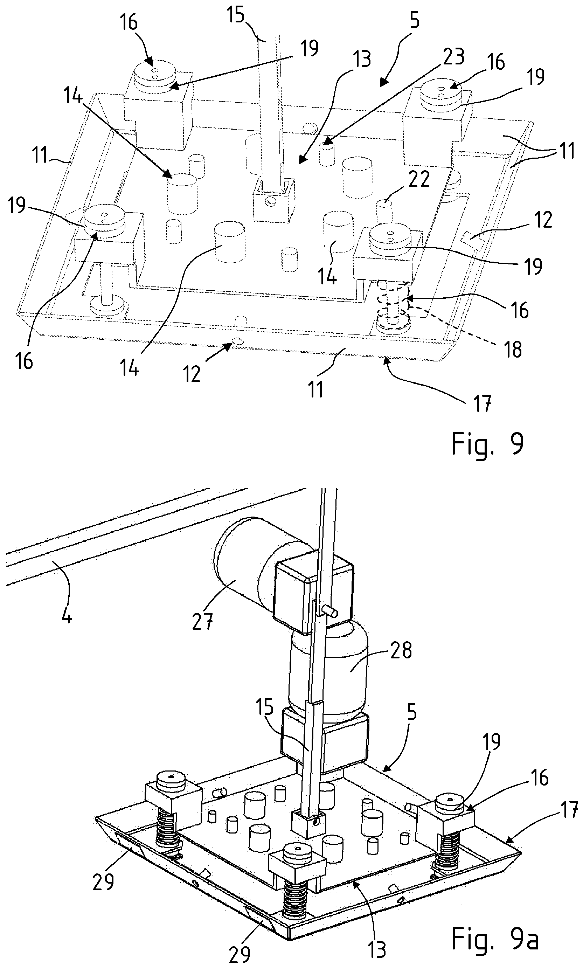

Ein weiterer Antrieb 27 am gegenüberliegenden Ende bewirkt das Neigen des Steckers 5 in die gewünschte Richtung. Schließlich ist ein weiterer Antrieb 28 dafür vorgesehen, den Stecker 5 in die gewünschte Richtung zu drehen. Die Antriebe sind rein schematisch dargestellt und vergrößert noch einmal in der Figur 9a gezeigt.

Die Figur 8 zeigt das Zusammenspiel der Antriebe. Wenn beispielsweise der Stecker 5 lediglich parallel zur Ausgangsposition verschwenkt oder auch verlagert werden soll, muss der Schwenkwinkel W1 sowohl an dem Turm 3 eingestellt werden durch horizontales Verschwenken des Arms. Gleichzeitig muss der Schwenkwinkel W1 durch Verschwenken des Steckers 5 in entgegengesetzter Richtung relativ zum Ausleger 4 verschwenkt werden. Je nachdem, wie weit der Ausleger 4 teleskopiert wird, muss gegebenenfalls auch die Position des Auslegerhebers 10 in Form des Gegengewichts eingestellt werden.

Die grobe Positionierung des landseitigen Steckers 5 zur wasserfahrzeugseitigen Steckdose erfolgt durch die Verwendung eines 3D-Sensorsystems. Das Funktionsprinzip der Sensoren beruht insbesondere auf einem Lichtlaufzeitverfahren. Die Sensoren können sowohl an dem landseitigen Stecker 5 als auch an der wasserseitigen Steckdose vorgesehen sein. Die erste Positionierung erfolgt mittels eines Fotomischdetektors (FMD). Mit dem Fotomischdetektor wird die relative Raumlage der landseitigen Reflektoren zu den schiffsseitigen Reflektoren erfasst. Der landseitige Stecker 5 wird daraufhin so verfahren, dass der voreingestellte SollWert der Position der landseitigen Reflektoren zu den schiffsseitigen Reflektoren erreicht wird.

Anschließend erfolgt eine Feinpositionierung mit Hilfe von Ultraschallsensoren. Außenbleche bzw. Positionierflächen des Steckers 5 bzw. der Steckdose 6 sind hierzu vorzugsweise trichterförmig gestaltet. Die Figuren 9 und 9a zeigen, dass die Positionierflächen 11, die im Rechteck oder Quadrat angeordnet sind jeweils schräg gestellt sind, sodass ein sich nach unten verjüngender Pyramidenstumpf gebildet wird. An jeder der vier längsseitigen Positionsfläche 11 befindet sich ein Sensor 12 in Form eines Ultraschallsensors. Die Sensoren 12 bestimmen per Ultraschall den Abstand zu den entsprechenden Positionierflächen an der Steckdose. Der Stecker wird solange ausgerichtet, bis alle vier Ultraschallsensoren 12 einen annähernd gleichen Abstand zu der entsprechenden Positionierfläche 11 an der Steckdose melden. Es wird vorab definiert, wie groß dieser Soll-Abstand sein soll.

Durch die beiden aufeinanderfolgenden Schritte Grobpositionierung und Feinpositionierung wird in der Regel eine ausreichend genaue Position des Steckers 5 zur Steckdose 6 erreicht.

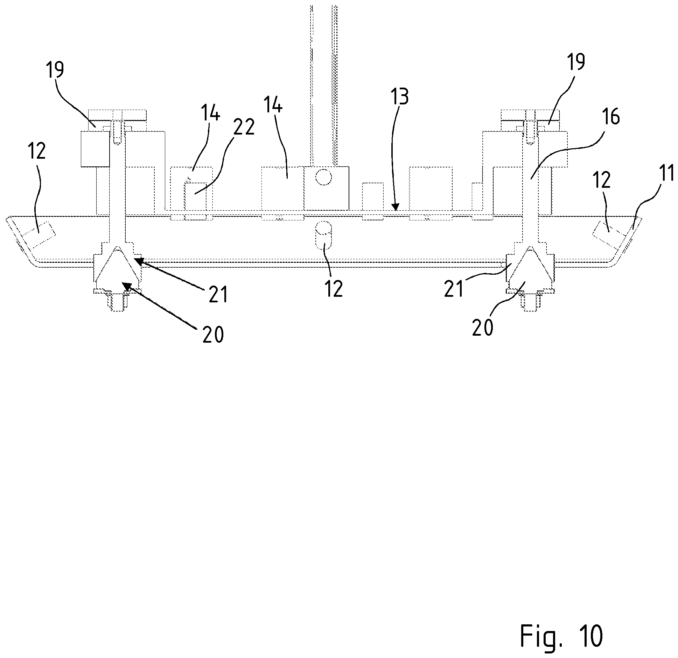

Die Figuren 9 und 10 zeigen ferner, dass der Stecker 5 aus zwei zueinander beweglichen Baugruppen besteht. Der Stecker 5 und umfasst einerseits eine Tragplatte 13. Auf der Tragplatte 13 sind mehrere Stromkontakte 14 angeordnet. Die Tragplatte 13 ist über eine Strebe 15 hängend an dem Ausleger 4 montiert. Die Strebe 15 ist schwenkbeweglich gegenüber dem Ausleger 4 in drei Raumrichtungen verlagerbar. Über die Strebe 15 kann der Stecker 5 mittels des Auslegers 4 angehoben und abgesenkt und auch in die richtige Position gedreht werden.

Die Tragplatte 13 besitzt jeweils im Eckbereich Verbindungselemente 16. Über die Verbindungselemente 16 ist die Tragplatte 13 beweglich mit einem Positionierrahmen 17 als untere Baugruppe verbunden. Der Positionierrahmen 17 umfasst die trichterförmig angeordneten Positionierflächen 11. Der Positionierrahmen 17 ist optional über Druckfedern 18, welche die Verbindungselemente 16 umgeben, zu der Tragplatte abgestützt. Elektrohaftmagnete 19 können alternativ oder zusätzlich zu den Druckfedern 18 vorgesehen sein, um die Verbindungselemente 16 vorerst in der ausgefahrenen Position zu halten.

Bei diesem Ausführungsbeispiel befinden sich zusätzlich auf der Schiffsseite Zentrierelemente 20 in Form von mehreren Zentrierkegeln. Diese Zentrierkegel fassen in der korrekten Position in Zentrieraufnahmen 21. Die Zentrieraufnahmen 21 befinden sich unterhalb der Verbindungselemente 16. Die Verbindungelemente 16 sind fest mit dem Positionierrahmen verbunden und längsverschieblich an der Tragplatte 13 gelagert. Die Verbindungselemente 16 führen die Tragplatte 13 gegen seitliche Verlagerungen und verhindern ein Verdrehen der Tragplatte 13 relativ zum Positionierrahmen 17. Wenn also die Verbindungselemente 16 exakt an den Zentrieraufnahmen 21 zentriert sind, befindet sich nicht nur der Positionierrahmen 17 in der richtigen Position, sondern auch die Tragplatte 13 mit den elektrischen Kontakten. Die Figur 10 zeigt, dass die Zentrieraufnahme 20 eine Trichterform hat, während das Zentrierelement 21 eine dazu passende Kegelform hat.

Wenn sich der Stecker 5 zur Steckdose verdreht im Raum befindet oder wenn die Positionierung durch die Ultraschallsensoren nicht ganz genau genug ist, dann erfolgt eine mechanische Positionierung über die Zentrierelemente 20 und die Zentrieraufnahmen 21. Zu diesem Zeitpunkt hält die Verankerung der Verbindungselemente d. h. entweder Druckfedern, die zwischen der Tragweite 13 und dem Positionierrahmen 17 wirken oder Elektrohaftmagnete die Tragplatte 13 noch im vertikalen Abstand zu dem Positionierrahmen 17. Nun wird der Stecker 5 durch Überwinden der Federkraft bzw. der Rückhaltkraft über den Ausleger 4 weiter abgesenkt. Dadurch kommen die Stromkontakte 14 des Steckers 5 mit den zugehörigen Steckkontakten an der Steckdose in Kontakt.

Beim Stecken findet zuerst ein Kontakt zwischen einem auf der Tragplatte 13 und der Gegenseite (Wasserfahrzeug) angebrachten Erdungsskontakte statt. Danach greifen die Hauptstromkontakte ineinander. Erst danach kontaktieren auf der Tragplatte 13 und der Gegenseite (Wasserfahrzeug) angebrachten Pilotkontakte. Ein Signal, das über die Pilotkontakte geschickt wird, gibt den Strom zum Einschalten von auf der Tragplatte 13 angebrachten Elektrohaftmagneten 23 frei. Anstelle von Elektrohaftmagneten können andere Verankerungsmittel vorgesehen sein, welche den Stecker 5 an der Steckdose während der Energieübertragung halten. Diese Verankerungen, bspw. durch Elektrohaftmagnete, halten den landseitigen Stecker mit der schiffsseitigen Steckdose zusammen, damit der Auslegerantrieb des Auslegers 4 nicht dauerhaft so viel Drehmoment aufbringen muss, um einen sicheren Kontakt zu gewährleisten.

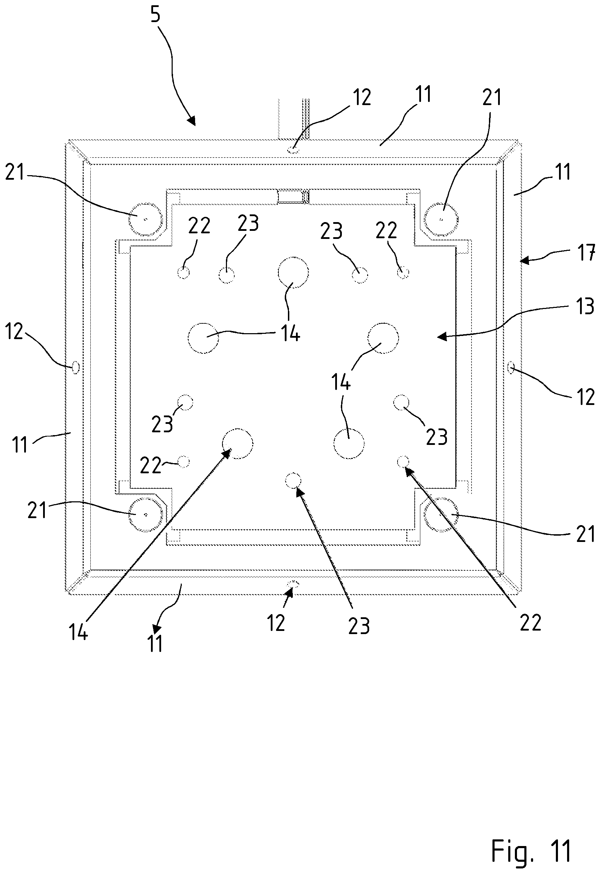

Die Figur 11 zeigt in einer Ansicht von unten einerseits den außen liegenden Positionierrahmen 17 mit seinen trichterförmigen Positionierflächen 11 sowie die Tragplatte 13 mit fünf gleichmäßig verteilt angeordneten Stromkontakten 14 sowie mit mehreren Pilotkontakten 22, die im Karree angeordnet sind. Zusätzlich befinden sich abwechselnd zu den Stromkontakten 14 jeweils Elektrohaftmagnete 23 an der Unterseite der Tragplatte 13.

Der Positionierrahmen 17 zeigt darüber hinaus die Sensoren 12 zur Ultraschallpositionierung sowie die kegelförmigen Zentrieraufnahmen 21, die jeweils im Eckbereich des Positionierrahmens 17 angeordnet sind. Die Figur 9a zeigt zusätzlich im Eckbereich angeordnete Reflektorplatten 29.

### Bezugszeichen:

- 1 -: Energieübertragungssystem
- 2 -: Wasserfahrzeug
- 3 -: Turm
- 4 -: Ausleger
- 5 -: Stecker
- 6 -: Steckdose
- 7 -: Aufbau
- 8 -: Gehäuse
- 9 -: Verschluss
- 10 -: Auslegerheber (Gegengewicht)
- 11 -: Positionierfläche
- 12 -: Sensor
- 13 -: Tragplatte
- 14 -: Stromkontakt
- 15 -: Strebe
- 16 -: Verbindungselement
- 17 -: Positionierrahmen
- 18 -: Druckfeder
- 19 -: Elektrohaftmagnet
- 20 -: Zentrierelemente
- 21 -: Zentrieraufnahme
- 22 -: Pilotkontakt
- 23 -: Elektrohaftmagnet
- 24 -: Antrieb
- 25 -: Antrieb
- 26 -: Antrieb
- 27 -: Antrieb
- 28 -: Antrieb
- 29 -: Reflektorplatten

- F -: Auslegerhebekraft
- G -: Gewichtskraft
- W1 -: Schwenkwinkel
- Y -: horizontale Achse
- Z -: vertikale Achse

## Patentansprüche

1. Energieübertragungseinrichtung (1) für ein Wasserfahrzeug (2) mit folgenden Merkmalen:
a) Landseitig ist ein Turm (3) angeordnet, der einen Ausleger (4) trägt, wobei der Ausleger (4) um eine horizontale und um eine vertikale Achse (Y, Z) schwenkbar mit dem Turm (3) verbunden ist;
b) Der Ausleger (4) weist an seinem freien Ende einen ersten Stecker (5) auf, der mit einem zweiten Stecker (6) an dem Wasserfahrzeug (2) zur Übertragung elektrischer Energie koppelbar ist;
c) Der Stecker (5) an dem Ausleger (4) ist dazu ausgebildet in einer vertikalen Steckbewegung von oben mit dem zweiten, nach oben orientieren Stecker (6) am Wasserfahrzeug (2) zur Energieübertragung in elektrischen Kontakt zu kommen, indem der Ausleger (4) relativ zum Turm (3) verschwenkt wird,
**dadurch gekennzeichnet, dass**
d) der Ausleger (4) teleskopierbar ist.

2. Energieübertragungseinrichtung (1) nach Anspruch 1, **dadurch gekennzeichnet, dass** an wenigstens einem der Stecker (5, 6) wenigstens ein Sensor (12) zur Positionierung des erstes Steckers (5) gegenüber dem zweiten Stecker (6) angeordnet ist, wobei in einer Auswerte- und Steuereinheit Daten der Sensoren (12) in Steuersignale zur Ansteuerung von Auslegerantrieben umsetzbar sind, um den Ausleger (4) zu verschwenken und um die Stecker (5, 6) zu koppeln oder zu entkoppeln.

3. Energieübertragungseinrichtung (1) nach Anspruch 2, **dadurch gekennzeichnet, dass** an den Steckern (5, 6) Reflektoren angeordnet sind, um Sensorsignale eines Sensors (12) zu reflektieren, der an dem jeweils anderen Stecker (5, 6) angeordnet ist.

4. Energieübertragungseinrichtung (1) nach einem der Ansprüche 1 bis 3, **dadurch gekennzeichnet, dass** der erste Stecker (5) 3-achsig drehbar mit dem Ausleger (4) verbunden ist.

5. Energieübertragungseinrichtung (1) nach einem der Ansprüche 2 bis 4, **dadurch gekennzeichnet, dass** in der Kupplungsposition der Stecker (5, 6) Schrägflächen aufweisende Zentrierelemente (20) mit Zentrieraufnahmen (21) an dem anderen Stecker (5, 6) in Eingriff stehen.

6. Energieübertragungseinrichtung (1) nach Anspruch 5, **dadurch gekennzeichnet, dass** Druckfedern (18) an wenigstens einem der Stecker (5) angeordnet sind, deren Federkraft nach der mechanischen Zentrierung über die Zentrierelemente (20) und Zentrieraufnahmen (21) einem weiteren Annähern der elektrischen Kontakte entgegenwirkt, so dass ein elektrischer Kontakt zwischen den Steckern (5, 6) nur dann besteht, wenn die Federkraft kleiner ist als die durch aktives Absenken des Auslegers (4) erzeugte Kraft.

7. Energieübertragungseinrichtung (1) nach einem der Ansprüche 1 bis 6, **dadurch gekennzeichnet, dass** der Ausleger (4) Schleifleitungen und mit den Schleifleitungen in Kontakt stehende Stromabnehmer aufweist, um zu übertragende elektrische Energie von einem nicht teleskopierten Abschnitt des Auslegers (4) auf einen teleskopierten Abschnitt des Auslegers (4) zu übertragen.

8. Energieüberragungssystem (1) nach einem der Ansprüche 1 bis 7, **dadurch gekennzeichnet, dass** der Ausleger (4) mit einem Auslegerheber (10) gekoppelt ist, wobei der Auslegerheber (10) eine Auslegerhebekraft (F) auf den Ausleger (4) ausübt, die so groß ist, dass der erste Stecker (5) von dem zweiten Stecker (6) allein durch die Auslegerhebekraft (F) trennbar ist.

9. Energieübertragungseinrichtung (1) nach Anspruch 8, **dadurch gekennzeichnet, dass** der Auslegerheber (10) ein Gegengewicht aufweist, das auf der dem ersten Stecker (5) abgewandten Ende des Auslegers (4) angeordnet ist.

10. Verfahren zur Übertragung elektrischer Energie auf ein Wasserfahrzeug mittels einer Energieübertragungseinrichtung (1) nach einem der Ansprüche 1 bis 9, **dadurch gekennzeichnet, dass** das Wasserfahrzeug (2) mit seinem zweiten Stecker (6) in eine Reichweite des ersten Steckers (5) gebracht wird, anschließend der Ausleger (4) durch Teleskopieren sowie horizontales und vertikales Verschwenken in eine Position gebracht wird, in der sich der erste Stecker (5) über dem zweiten Stecker (6) befindet, anschließend mittels Sensoren eine Abstandsmessung der Stecker (5, 6) erfolgt, um in Abhängigkeit von den aus den gemessenen Daten berechneten Steuerdaten den Ausleger (4) soweit abzusenken, dass mechanische Zentrierelemente (20) und Zentrieraufnahmen (21) zwischen den Steckern (5, 6) in Eingriff gelangen, wobei der Ausleger (4) nach der mechanischen Zentrierung gegen eine zwischen den Steckern (5, 6) wirkende Federkraft so weit abgesenkt wird, bis ein elektrischer Kontakt zwischen den Steckern (5, 6) zu Energieübertragung hergestellt ist.

11. Verfahren nach Anspruch 10, **dadurch gekennzeichnet, dass** zum Lösen der Steckverbindung eine Kraft, die den ersten Stecker (5) senkt, reduziert wird, bis der erste Stecker (5) durch die Auslegerhebekraft (F) eines Auslegerhebers (10) angehoben wird.

## Claims

1. Energy transmission device (1) for a watercraft (2) with the following features:
a) on the land side, a tower (3) is disposed which carries a boom (4), wherein the boom (4) is connected to the tower (3) so as to be pivotable about a horizontal and a vertical axis (Y, Z);
b) the boom (4) has at its free end a first plug (5) which can be coupled to a second plug (6) on the watercraft (2) for transmitting electrical energy;
c) the plug (5) on the boom (4) is configured to come into electrical contact with the second, upwardly oriented plug (6) on the watercraft (2) in a vertical plugging movement from above for transmitting energy by pivoting the boom (4) relative to the tower (3),
**characterized in that**
d) the boom (4) is telescopic.

2. The energy transmission device (1) according to claim 1, **characterized in that** at least one sensor (12) for positioning the first plug (5) relative to the second plug (6) is disposed on at least one of the plugs (5, 6), wherein, in an evaluation and control unit, data from the sensors (12) can be converted into control signals for controlling boom drives in order to pivot the boom (4) and to couple or uncouple the connectors (5, 6).

3. The energy transmission device (1) according to claim 2, **characterized in that** reflectors are disposed on the plugs (5, 6) in order to reflect sensor signals of a sensor (12) which is disposed on the respective other plug (5, 6).

4. The energy transmission device (1) according to any one of claims 1 to 3, **characterized in that** the first plug (5) is connected to the boom (4) in a 3-axis rotatable manner.

5. The energy transmission device (1) according to any one of claims 2 to 4, **characterized in that** in the coupling position of the plugs (5, 6) centering elements (20) having inclined surfaces engage with centering receptacles (21) on the other plug (5, 6).

6. The energy transmission device (1) according to claim 5, **characterized in that** compression springs (18) are disposed on at least one of the plugs (5), the spring force of which counteracts a further approach of the electrical contacts after the mechanical centering via the centering elements (20) and centering receptacles (21), such that electrical contact between the plugs (5, 6) only exists when the spring force is smaller than the force generated by actively lowering the boom (4).

7. The energy transmission device (1) according to any one of claims 1 to 6, **characterized in that** the boom (4) has contact lines and current collectors in contact with the contact lines in order to transfer electrical energy to be transmitted from a non- telescoping section of the boom (4) to a telescoping section of the boom (4).

8. The energy transmission system (1) according to any one of claims 1 to 7, **characterized in that** the boom (4) is coupled to a boom lifter (10), wherein the boom lifter (10) exerts a boom lifting force (F) on the boom (4) which is so great that the first plug (5) can be separated from the second plug (6) solely by the boom lifting force (F).

9. The energy transmission device (1) according to claim 8, **characterized in that** the boom lifter (10) has a counterweight which is disposed on the end of the boom (4) facing away from the first plug (5).

10. A method for transmitting electrical energy to a watercraft by means of an energy transmission device (1) according to any one of claims 1 to 9, **characterized in that** the watercraft (2) with its second plug (6) is brought within range of the first plug (5), then the boom (4) is brought by telescoping and horizontal and vertical pivoting into a position in which the first plug (5) is located above the second plug (6), then a distance measurement of the plugs (5, 6) is carried out by means of sensors in order to lower the boom (4) as far as possible depending on the control data calculated from the measured data, that mechanical centering elements (20) and centering receptacles (21) engage between the plugs (5, 6), wherein the boom (4) is lowered after the mechanical centering against a spring force acting between the plugs (5, 6) until an electrical contact is established between the plugs (5, 6) for transmitting energy.

11. The method according to claim 10, **characterized in that**, in order to release the plug connection, a force which lowers the first plug (5) is reduced until the first plug (5) is lifted by the boom lifting force (F) of a boom lifter (10).

## Revendications

1. Dispositif de transmission d'énergie (1) pour un véhicule marin (2) avec des caractéristiques suivantes :
a) une tour (3) est disposée sur terre, laquelle porte une flèche (4), dans lequel la flèche (4) est reliée à la tour (3) de manière à pouvoir pivoter autour d'un axe horizontal et autour d'un axe vertical (Y, Z) ;
b) la flèche (4) présente sur son extrémité libre un premier connecteur mâle (5) qui peut être couplé à un deuxième connecteur mâle (6) sur le véhicule marin (2) pour la transmission d'énergie électrique ;
c) le connecteur mâle (5) sur la flèche (4) est réalisé pour entrer en contact électrique avec le deuxième connecteur mâle (6) orienté vers le haut sur le véhicule marin (2) pour la transmission d'énergie dans un mouvement d'enfichage vertical depuis le haut en ce que la flèche (4) est pivotée par rapport à la tour (3),
**caractérisé en ce que**
d) la flèche (4) est télescopique.

2. Dispositif de transmission d'énergie (1) selon la revendication 1, **caractérisé en ce qu'**au moins un capteur (12) pour le positionnement du premier connecteur mâle (5) par rapport au deuxième connecteur mâle (6) est disposé sur au moins un des connecteurs mâles (5, 6), dans lequel, dans une unité d'évaluation et de commande, des données des capteurs (12) peuvent être converties en signaux de commande pour le pilotage d'entraînements de flèche, pour faire pivoter la flèche (4) et pour coupler ou découpler les connecteurs mâles (5, 6).

3. Dispositif de transmission d'énergie (1) selon la revendication 2, **caractérisé en ce que** sont disposés sur les connecteurs mâles (5, 6) des réflecteurs pour réfléchir des signaux d'un capteur (12), qui est disposé sur l'autre connecteur mâle (5, 6) respectivement.

4. Dispositif de transmission d'énergie (1) selon l'une quelconque des revendications 1 à 3, **caractérisé en ce que** le premier connecteur mâle (5) est relié à la flèche (4) de manière à pouvoir tourner sur 3 axes.

5. Dispositif de transmission d'énergie (1) selon l'une quelconque des revendications 2 à 4, **caractérisé en ce que** des éléments de centrage (20) présentant des surfaces inclinées viennent en prise, dans la position de couplage des connecteurs mâles (5, 6), avec des logements de centrage (21) sur l'autre connecteur mâle (5, 6).

6. Dispositif de transmission d'énergie (1) selon la revendication 5, **caractérisé en ce que** des ressorts de pression (18) sont disposés sur au moins un des connecteurs mâles (5) dont la force de ressort s'oppose à un rapprochement supplémentaire des contacts électriques après le centrage mécanique par l'intermédiaire des éléments de centrage (20) et les logements de centrage (21), de telle sorte qu'il n'existe un contact électrique entre les connecteurs mâles (5, 6) que lorsque la force de ressort est inférieure à la force générée par l'abaissement actif de la flèche (4).

7. Dispositif de transmission d'énergie (1) selon l'une quelconque des revendications 1 à 6, **caractérisé en ce que** la flèche (4) présente des lignes de contact et des pantographes en contact avec les lignes de contact pour transmettre de l'énergie électrique à transmettre d'une section non télescopique de la flèche (4) à une section télescopique de la flèche (4).

8. Système de transmission d'énergie (1) selon l'une quelconque des revendications 1 à 7, **caractérisé en ce que** la flèche (4) est couplée à un système de levage de flèche (10), dans lequel le système de levage de flèche (10) exerce sur la flèche (4) une force de levage de flèche (F) qui est si importante que le premier connecteur mâle (5) peut être séparé du deuxième connecteur mâle (6) uniquement par la force de levage de flèche (F).

9. Dispositif de transmission d'énergie (1) selon la revendication 8, **caractérisé en ce que** le système de levage de flèche (10) présente un contrepoids qui est disposé sur l'extrémité de la flèche (4) opposée au premier connecteur mâle (5).

10. Procédé de transmission d'énergie électrique sur un véhicule marin au moyen d'un dispositif de transmission d'énergie (1) selon l'une quelconque des revendications 1 à 9, **caractérisé en ce que** le véhicule marin (2) est amené par son deuxième connecteur mâle (6) à une portée du premier connecteur mâle (5), puis la flèche (4) est ensuite amenée par télescopage et pivotement horizontal et vertical dans une position dans laquelle le premier connecteur mâle (5) se trouve au-dessus du deuxième connecteur mâle (6), puis une mesure de distance des connecteurs mâles (5, 6) est effectuée au moyen de capteurs, pour abaisser la flèche (4) en fonction des données de commande calculées à partir des données mesurées à un tel degré que des éléments de centrage mécaniques (20) et des logements de centrage (21) parviennent en prise entre les connecteurs mâles (5, 6), dans lequel la flèche (4) est abaissée après le centrage mécanique contre une force de ressort agissant entre les connecteurs mâles (5, 6) jusqu'à ce qu'un contact électrique soit établi entre les connecteurs mâles (5, 6) pour la transmission d'énergie.

11. Procédé selon la revendication 10, **caractérisé en ce que** pour desserrer la liaison d'enfichage, une force qui abaisse le premier connecteur mâle (5) est réduite jusqu'à ce que le premier connecteur mâle (5) soit soulevé par la force de levage de flèche (F) d'un système de levage de flèche (10).
